# EUROPÄISCHE PATENTSCHRIFT

(11) **EP 1 357 065 B1**
(45) Veröffentlichungstag und Bekanntmachung des Hinweises auf die Patenterteilung: **06.04.2005**
(21) Anmeldenummer: 03008715.9
(22) Anmeldetag: 15.04.2003
(51) Int. Cl.: B65G 47/82, B65G 47/84, B65G 57/03, B65B 35/16

(54) **Vorrichtung und Verfahren zum Anstapeln kleinstückiger Artikel**
Device and method for stacking small objects
Dispositif et procédé d'empilage de petits objets

(30) Priorität: 22.04.2002 DE 10217899
(43) Veröffentlichungstag der Anmeldung: 29.10.2003
(73) Patentinhaber: THEEGARTEN-PACTEC GMBH & CO. KG, 01237 Dresden (DE)
(72) Erfinder: Stötzner, Rolf, 01219 Dresden (DE); Pietsch, Peter, 01309 Dresden (DE)
(74) Vertreter: Grünecker, Kinkeldey, Stockmair & Schwanhäusser Anwaltssozietät

(56) Entgegenhaltungen:
- EP-A- 0 801 014
- WO-A-99/14141
- DE-A- 4 041 652
- DE-A- 19 618 511

## Beschreibung

Die Erfindung betrifft eine Vorrichtung zum Anstapeln kleinstückiger Artikel, insbesondere einer Verpackungsmaschine, mit einem rotierenden Übergabekopf, an dem eine Mehrzahl von Artikelaufnahmeeinheiten zum Haltern jeweils eines Artikels drehbar angeordnet sind, und mit einem stromab des Übergabekopfes angeordneten Stapelbandförderer mit einem umlaufenden Stapelband zur gruppenweisen Aufnahme der einzelnen von dem Übergabekopf zugeführten Artikel und einer rotierenden Vorrichtung, die den Artikel während der Übergabe von der Artikelaufnahmeeinheit an den Stapelbandförderer kontaktiert.

Daneben betrifft die Erfindung ein Verfahren zum Anstapeln kleinstückiger Artikel mit folgenden Schritten: Aufnehmen und Haltern eines Artikels in einer Artikelaufnahmeeinheit eines rotierenden Übergabekopfes; Drehen des gehalterten Artikels relativ zu dem Übergabekopf; und Übergeben des gedrehten Artikels an einen Stapelbandförderer, wobei die jeweilige Lage des Artikels während der Übergabe von der Artikelaufnahmeeinheit an den Stapelbandförderer durch eine rotierende Andrückvorrichtung gesichert wird.

Für die Verpackung kleinstückiger Artikel, z.B. von Süßwaren wie Bonbons, (z.B. Weichoder Hartkaramell) ist es bekannt, die Artikel einzeln zu verpacken, wobei die Artikel auf Grundlage eines Rotations-Transportprinzipes durch eine Verpackungsmaschine bewegt werden. Hierbei werden z.B. von einem Massestrang abgetrennte Bonbons zunächst von einem Greiferrad ergriffen und unter Rotation desselben an ein mit gleichem Wirkumfang versehenes Übergaberad übergeben, das die Artikel seinerseits an ein Einwickelrad weitergibt, mit Hilfe dessen die Artikel unter Zuführung von Packstoff in diesen eingewickelt werden.

Derartige auf dem "Rotationsprinzip" der Übergabeorgane aufgebaute Verpackungsmaschinen, insbesondere Bonbonverpackungsmaschinen können mit Geschwindigkeiten von bis zu ca. 1500 Stück pro Minute arbeiten und sind außerordentlich effizient. Problematisch ist hierbei jedoch die weitere Prozeßgestaltung, insbesondere, soweit diese ein Bilden von Sammelpackungen der bereits einzeln verpackten Gegenstände, hierbei insbesondere zu Stangenpackungen betrifft.

Zur Bildung von Stangenverpackungen hat die Anmelderin daher in der DE 196 18 511 hierfür ein Verfahren entwickelt, bei der die einzeln verpackten Artikel von einem Greiferrad übernommen werden und dann an ein Stapelband übergeben werden, dort jeweils zur gewünschten Anzahl von Artikeln gruppiert werden und dann als gestapelte Artikelgruppe einer weiteren Verpackung zugeführt werden.

Bei der Durchführung des genannten Verfahrens hat es sich jedoch insbesondere bei dem Wunsch, den Produktdurchsatz zu erhöhen, als problematisch erwiesen, die Artikel von dem Greiferrad an den Stapelförderer zu übergeben, und hierbei sicherzustellen, daß nicht einzelne Artikel neben der gewünschten Position zu liegen kommen und dadurch möglicherweise den Stapelvorgang blockieren.

Daneben sind eine Vorrichtung und ein Verfahren der eingangs genannten Art aus der WO 99/14141 bekannt, wobei die zwischen dem Übergabekopf und dem Stapelbandförderer angeordnete Vorrichtung drei Paare von einander zugewandten dünnen Förderbändern aufweist, zwischen denen die Artikel während der Übergabe kontaktiert werden. Allerdings dient diese Vorrichtung lediglich als Zwischenförderer, ist jedoch nicht geeignet, eine definierte Lage des jeweils zuletzt übergebenen Artikels bei dessen Übergabe an den Stapelbandförderer bezüglich der bereits zuvor übergebenen Artikel zu gewährleisten.

Der Erfindung liegt daher die Aufgabe zugrunde, eine Vorrichtung und ein Verfahren der eingangs genannten Art dahingehend zu verbessern, daß eine sichere Lage der Artikel während der Übergabe an den Stapelbandförderer mit hinreichender Sicherheit gewährleistet werden kann.

Für eine Vorrichtung der eingangs genannten Art wird diese Aufgabe erfindungsgemäß dadurch gelöst, daß die rotierende Vorrichtung eine Andrückvorrichtung ist, mittels der der jeweils zuletzt übergebene Artikel auf andere bereits zuvor an den Stapelbandförderer übergebene Artikel andrückbar ist.

Hinsichtlich eines Verfahrens der eingangs genannten Art wird diese Aufgabe erfindungsgemäß dadurch gelöst, daß der jeweils zuletzt übergebene Artikel von der als Andrückvorrichtung ausgebildeten rotierenden Vorrichtung auf andere bereits zuvor an den Stapelbandförderer übergebene Artikel angedrückt wird.

Eine derartige Ausgestaltung der Vorrichtung zum Anstapeln kleinstückiger Artikel führt erfindungsgemäß dazu, daß jeder Artikel, der von dem Übergabekopf an den Stapelbandförderer übergeben wird, in einer genau definierten Position an dem Stapelbandförderer zu liegen kommt. Da die rotierende Andrückvorrichtung während der Übergabe den Artikel berührt, bleibt der Artikel in der gewünschten Lage, auch nachdem er von der Artikelaufnahmeeinheit des Übergabekopfes losgelassen worden ist. Hierdurch wird sichergestellt, daß kein Artikel, nachdem er losgelassen worden ist, und bevor der nächste Artikel auf den bisherigen Artikelstapel aufgelegt wird, sich von dem Stapel lösen kann und möglicherweise durch die federnde Wirkung des Verpackungsmaterials sich aufstellen oder querstellen kann, um hierdurch den Anstapelvorgang zu blockieren oder zu unterbrechen.

Vorzugsweise ist hierbei die rotierende Andrückvorrichtung als kontinuierlich umlaufendes Sperrrad ausgebildet, das an einer zur Rotationsachse des Übergabekopfes parallelen Sperrradachse angeordnet ist. Hierbei weist das Sperrrad vorzugsweise zwei parallele, voneinander beabstandete Sperrscheiben auf, deren Abstand größer ist, als die Breite des Stapelbandes des Stapelbandförderers.

Die Sperrscheiben wirken hierbei funktionsstabilisierend, da sie das Zurückweichen oder Rückkippen der Artikel verhindern, auch nachdem diese von den Artikelaufnahmeeinheiten losgelassen worden sind.

Hierbei sind in einer bevorzugten Ausführungsform das Sperrrad bzw. die Sperrscheiben an ihrer äußeren Umfangslinie im Wesentlichen "sägezahnförmig" ausgebildet, wobei ein Zahnrücken eines Zahnes in Umlaufrichtung des Sperrrades jeweils vor der Zahnspitze dieses Zahnes positioniert ist.

Vorzugsweise sind die Umlaufgeschwindigkeiten des Sperrrades und des Übergabekopfes in einem festen Drehzahlverhältnis zueinander gewählt, wohingegen die Umlaufgeschwindigkeit des Übergabekopfes erheblich höher vorzugsweise doppelt oder dreimal so hoch als die Umlaufgeschwindigkeit des Stapelbandes gewählt sind.

An dem Stapelband sind gemäß einer Ausführungsform Packfächer ausgebildet, die durch Mitnehmer begrenzt sind, wobei diese im Wesentlichen vertikal zum Stapelband an diesem angeordnet sind.

Weiterhin ist der Übergabekopf vorzugsweise um eine starre Rotationsachse drehbar ausgebildet, wobei an dem Übergabekopf eine Mehrzahl von Artikelaufnahmeeinheiten, vorzugsweise acht Stück angeordnet sind. Jede der Artikelaufnahmeeinrichtungen weist hierbei ein Schwenkteil auf, das um eine zur Rotationsachse des Übergabekopfes parallele Drehachse an dem Übergabekopf angelenkt ist.

An jedem der Schwenkteile ist ein Paar von Greifhebeln angeordnet, wobei wiederum jeder der Greifhebel um eine zu der Drehachse senkrechte Greifhebeldrehachse schwenkbar ist. Hierbei ist es bei einer derartigen Ausführungsform als vorteilhaft anzusehen, daß keine Schub- sondern nur Dreh- bzw. Schwenkbewegungen von den nach außen hin freiliegenden beweglichen Teilen der Anstapelvorrichtung durchgeführt werden. Dies verhindert insbesondere Störungen im Bewegungsablauf, die insbesondere durch Verzuckerungen infolge von Ablagerungen von Zuckerstaub auf linear bewegten Teilen bisher aufgetreten sind.

In der bevorzugten Ausführungsform der erfindungsgemäßen Anstapelvorrichtung sind weiterhin an einem freien Ende der Greifhebel, das von den Greifhebelachsen beabstandet ist, Haltebacken zum Aufnehmen und Haltern des Artikels angeordnet.

Die Greifhebel sind vorzugsweise über einen Zwangslauf miteinander gekoppelt, der insbesondere über eine Verzahnung von Teilen der zueinander schwenkbaren Hebel ausgebildet ist. Hierdurch wird sichergestellt, daß die Artikel genau mittig gehalten und ebenso mittig auf dem Stapelbandförderer wiederum abgelegt werden. Unkontrollierbare Mittenversetzungen bei der Ablage der Artikel auf dem Stapelband und hierdurch entstehende Produktionsstörungen können somit erfindungsgemäß ausgeschlossen werden.

Die erfindungsgemäße Anordnung und Ausführung der Artikelaufnahmeeinheiten mittels schwenkbarer Greifhebel, die vorzugsweise auch seitlich außerhalb des Schwenkteiles angeordnet sind, führt vorteilhafterweise zu einem wesentlich einfacheren und kostengünstigeren Aufbau.

Durch den einseitigen Aufbau mit fliegend gelagerten Schwenkteilen wird ferner ein freier Zugang von einer Seite und eine verbesserte Wartungsfreundlichkeit erreicht. Da darüber hinaus keine linear beweglichen Teile mehr vorgesehen sind, ist ein exakterer Bewegungsablauf und insbesondere eine genauere Ausrichtung der Artikelhaltebacken selbst dann gewährleistet, wenn beim Einsatz in der Hartkaramellenverpackung Verzuckerungen aufgrund von Zuckerstaubablagerungen entstehen könnten.

Da nur noch rotatorische Bewegungen durchgeführt werden, ist auch eine hinreichende Abdichtung aller gegeneinander verdrehbaren Teile gegenüber Schmutzeinwirkungen von außen her (Zuckerstaub o.ä.) selbst im Dauereinsatz gewährleistbar.

Hinsichtlich des erfindungsgemäßen Verfahrens wird dieses vorzugsweise mittels einer Vorrichtung der eben beschriebenen Art durchgeführt. Hierbei erfolgt das Drehen des in den mit Haltebacken besetzen Greifhebeln der Artikelaufnahmeeinheit gehalterten Artikels entgegen der Drehrichtung des rotierenden Übergabekopfes.

Dies führt vorzugsweise dazu, daß die Absolutgeschwindigkeit des Artikels bei der Übergabe von dem rotierenden Übergabekopf an den Stapelbandförderer erheblich reduziert wird, so daß ein sicheres und sanftes Ablegen an dem Stapelbandförderer gewährleistet wird.

Nach dem Übergeben des Artikels wird die Artikelaufnahmeeinheit in Drehrichtung des rotierenden Übergabekopfes an ihre Ausgangsposition zurückgedreht, so daß sie zur Aufnahme eines neuen Artikels von einer Zuführeinheit bereit ist. Die Aufnahme des Artikels durch die Haltebacken des Übergabekopfes von Zuführbacken einer rotierenden Zuführeinheit, die vorzugsweise ein rotierender Packkopf ist, in dem die Artikel verpackt werden, erfolgt hierbei im Wesentlichen mit der Umlaufgeschwindigkeit des Übergabekopfes der gegenrichtungsgleich zur Umlaufgeschwindigkeit der Zuführeinheit rotiert.

Hierdurch wird ein harmonisches und effektives Übergeben und Anstapeln bereits einzeln vorverpackter Artikel bei hohen Betriebsgeschwindigkeiten von 1500 bis zu 2300 Artikeln und darüber hinaus ermöglicht.

Weitere bevorzugte Ausführungsformen und Einzelheiten der erfindungsgemäßen Vorrichtung sowie des erfindungsgemäßen Verfahrens sind Gegenstand der jeweiligen Unteransprüche.

Im Folgenden wird eine bevorzugte Ausführungsform der erfindungsgemäßen Vorrichtung anhand einer schematischen Zeichnung näher beschrieben. Darin zeigen:
- Fig. 1: eine schematische Gesamtansicht einer erfindungsgemäßen Vorrichtung zum Anstapeln kleinstückiger Artikel, in der dargestellt ist, wie die Artikel von einer Zuführeinrichtung auf einen rotierenden Übergabekopf der Anstapelvorrichtung übernommen und an einen Stapelbandförderer der Anstapelvorrichtung übergegeben werden,
- Fig. 2: eine Schnittansicht durch eine Artikelaufnahmeeinheit des Übergabekopfes im Bereich der als Sperrrad ausgebildeten Andrückvorrichtung entlang der Linie A-A in Fig. 1,
- Fig. 3: eine Draufsicht auf das in den Fig. 1 und 2 dargestellte Sperrrad das dessen Zusammenwirken mit dem in Fig. 1 gezeigten Stapelbandförderer darstellt, und
- Fig. 4 - 8: die Ablauffolge der Artikelübergabe von dem Übergabekopf an den Stapelbandförderer und den Einfluß der Andrückvorrichtung hierbei.

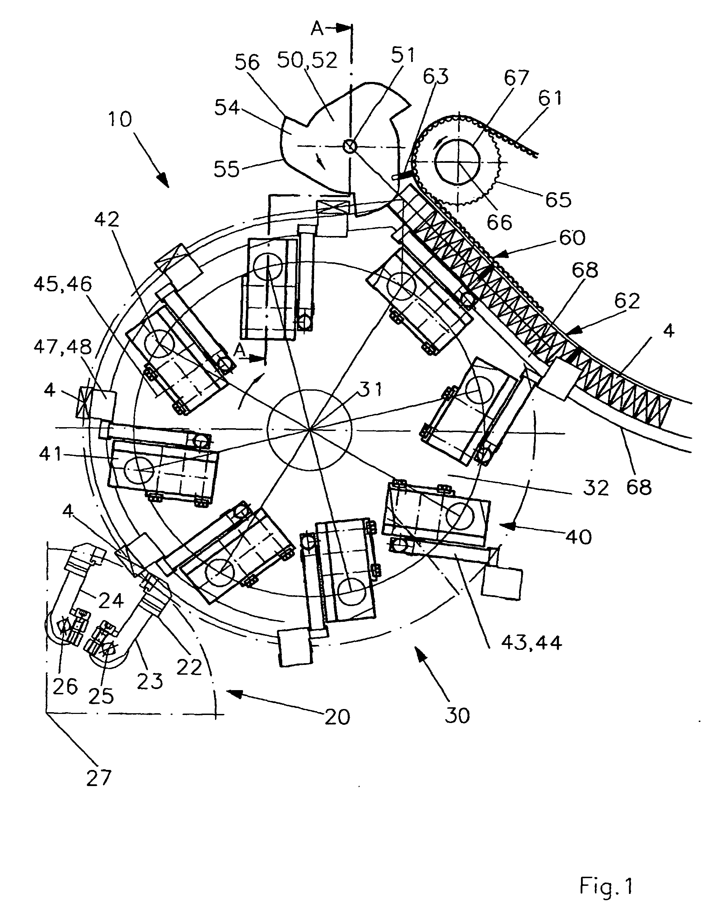

Ein bevorzugtes Ausführungsbeispiel der Vorrichtung und des Verfahrens zum Anstapeln kleinstückiger Artikel wird nachfolgend anhand der Fig. 1 bis 8 erläutert.

Das bevorzugte Ausführungsbeispiel, das die Verpackung von Bonbons bzw. Hart- oder Weichkaramellen von quaderförmiger Geometrie zeigt, insbesondere unter Vorbereitung der einzeln verpackten Bonbons (im Folgenden auch als Artikel oder Produkte bezeichnet) für die Zuführung zu einem - hier nicht dargestellten - Stangenverpacker, ist selbstverständlich nicht auf die Handhabung dieser Art von Gegenständen beschränkt. Vielmehr kann das Ausführungsbeispiel für eine Vielzahl anderer, insbesondere kleinstückiger Gegenstände, die verpackt werden sollen und die insbesondere entweder bereits einzeln vorverpackt oder auch unverpackt zu Gruppen versammelt und insbesondere zu Stangen verpackt werden sollen, Anwendung finden.

Darüber hinaus können einzelne Elemente der Gesamtvorrichtung wie z.B. ein Übergabekopf auch in anderen zusammenhängenden Maschinenverknüpfungen eingesetzt werden.

In dem beschriebenen Ausführungsbeispiel ist die erfindungsgemäße Vorrichtung zum Anstapeln kleinstückiger Artikel, die im Folgenden als Anstapelvorrichtung 10 bezeichnet wird, Teil einer Verpackungsmaschine 1, deren weitere - nicht dargestellte - Komponenten eine Einrichtung zur Anlieferung der zu verpackenden Artikel, eine Vereinzelungsvorrichtung für unsortiert angelieferte Artikel, diverse lineare oder rotatorische Transportoder Übertragssysteme bzw. Vorrichtungen für solche Artikel, Zuführeinrichtungen für Verpackungsmaterial, Verpackungseinrichtungen bzw. Packköpfe, Weiterfördereinrichtungen, Stangen- bzw. Tütenverpackungsvorrichtungen und/oder weitere Komponenten enthalten mag.

In derartigen Verpackungsmaschinen 1 können einzelne, z.B. von einem kontinuierlichen Massestrang abgetrennte Bonbonstücke nach Aufnahme und Zuförderung über ein hier nicht dargestelltes Greiferrad und/oder Übergaberad (wie dies aus der WO 93/25 440 bekannt ist), zu einer in Fig. 1 angedeuteten Zuführeinrichtung 20 gefördert werden, die hinsichtlich ihres Grundaufbaus und ihrer Bewegungsmechanik mit einem ähnlichen Aufbau, wie ihn der Übergabekopf 30 zeigt, versehen ist.

Die beschriebene Zuführeinrichtung kann insbesondere auch ein Packkopf sein, in dem die angelieferten Artikel 4 einzeln verpackt werden. Hierbei ist diese Zuführeinrichtung 20 um eine stationäre Zuführdrehachse 27 kontinuierlich umlaufend ausgebildet. An der Zuführeinrichtung 20 sind eine Mehrzahl von Artikelhalteeinrichtungen vorzugsweise in gleichen Abständen voneinander radial um die Zuführdrehachse 27 angeordnet.

Jede dieser Artikelhalteeinrichtungen weist ein Paar von Zuführgreifern 23, 24 auf, die jeweils um eine eigene Schwenkachse 25, 26 gegenläufig zueinander schwenkbar sind, und an deren freien, von den Schwenkachsen 25, 26 entfernten Enden Zuführbacken 21, 22 angeordnet sind mittels derer ein zuzuführender Artikel 4 greifbar und halterbar ist und von einer stromauf vorgeschalteten Artikelüberführungs- oder Bearbeitungseinheit an den der Zuführeinrichtung 20 nachgeschalteten Übergabekopf 30 übergeben werden kann.

Da vielfach der Wunsch besteht, derartige einzeln verpackte kleinstückige Artikel 4, wie die zuvor erwähnten Bonbons, anschießend in Stangen abzupacken, wie dies für Weichkaramell oder andere Süßigkeiten (z.B. Kaugummis) bekannt ist, ist es erforderlich, die Einzelstücke oder Artikel zu Gruppen zusammenzuordnen, um sie sodann einem (hier ebenfalls nicht dargestellten) Stangenpacker zuzuführen.

Hierfür ist die in Fig. 1 als Übersichtsdarstellung gezeigte Anstapelvorrichtung 10 vorgesehen, die den Übergabekopf 30 mit seinen Artikelaufnahmeeinheiten 40, sowie eine Andrückvorrichtung 50 und eine Artikelstapeleinrichtung, im Folgenden auch als Stapelbandförderer 60 bezeichnet, aufweist.

Der dargestellte Übergabekopf 30 umfaßt ein Gehäuse 32, das ebenfalls um eine stationäre Rotationsachse 31 drehbar angeordnet ist, und während des Betriebes der Anstapelvorrichtung 10 in einer bevorzugten Richtung, die in Fig. 1 durch einen Pfeil gezeigt ist (Uhrzeigersinn), kontinuierlich umläuft. Der Drehsinn der Zuführeinrichtung 20 und des Übergabekopfes 30 sind entgegengesetzt; die Drehgeschwindigkeiten sind jedoch aufeinander abgestimmt, vorzugsweise gleich.

Der ebenfalls in Fig. 1 dargestellte Stapelbandförderer läuft wiederum gegensinnig zu dem Übergabekopf um, jedoch mit erheblich geringerer, der Artikellänge angepaßten Geschwindigkeit. Diese erheblich geringere Fördergeschwindigkeit ist notwendig, um sicherzustellen, daß ein reibungsloses Aufeinanderstapeln der zu Stangen zu verpackenden Artikel 4 erfolgt.

An dem Gehäuse 32 des Übergabekopfes 30 sind eine Vielzahl von Artikelaufnahmeeinheiten 40, in der beschriebenen Ausführungsform acht Stück hiervon, angeordnet.

Die Artikelaufnahmeeinheiten 40 weisen hierbei jeweils ein Schwenkteil 41 auf, das um eine Drehachse 42 gegenüber dem Gehäuse 32 des Übergabekopfes 30 verdrehbar ist. Die jeweilige Stellung des Schwenkteiles 41 und somit der Artikelaufnahmeeinheit 40 gegenüber dem Gehäuse 32 des Übergabekopfes 30 hängt hierbei von der jeweiligen Drehposition des Übergabekopfes 30 ab und wird vorzugsweise über eine Steuerkurve einer in dem Gehäuse 32 ausgebildeten Kurvenscheibe (nicht dargestellt) gesteuert. Eine winkelabhängige elektronische Steuerung ist jedoch ebenso denkbar.

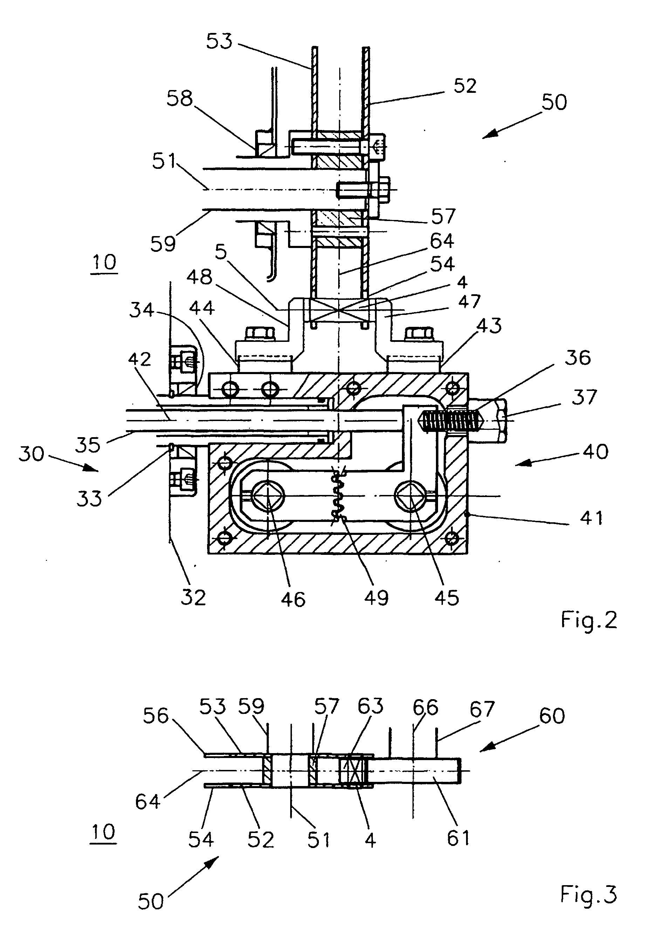

Wie in Fig. 2, die eine vergrößerte Schnittdarstellung entlang der Linie A-A in Fig. 1 zeigt, dargestellt ist, ist die Artikelaufnahmeeinheit 40, insbesondere ihr Schwenkteil 41 drehbar um die Drehachse 42 an dem Gehäuse 32 des Übergabekopfes 30 um die Drehwelle 33 drehbar angelenkt, wobei diese wiederum über einen Wellendichtring 34 gegenüber dem Gehäuse 32 abgedichtet ist, so daß keinerlei Partikel von außen eindringen können.

An dem Schwenkteil 41 ist ein erster Greifhebel 43 und ein zweiter Greifhebel 44 außenseitlich fliegend angeordnet, wobei die Greifhebel 43, 44 über eine erste Greifhebelachse 45 bzw. eine zweite Greifhebelachse 46 zueinander gegenläufig schwenkbar um diese Achsen mit dem Schwenkteil 41 verbunden sind. Wie in Fig. 2 dargestellt, sind der erste und der zweite Greifhebel 43, 44 über eine innerhalb des Schwenkteiles 41 angeordnete Verzahnung 49 miteinander gekoppelt, so daß eine Bewegung des ersten Greifhebels 43 eine gegenläufig rotatorische Bewegung des zweiten Greifhebels 44 bewirkt.

Eine derartige Bewegung wird durch eine vorzugsweise konzentrisch in der Drehwelle 33 angeordnete und entlang der Drehachse 42 verstellbare Schubstange 35 eingeleitet, die gegen ein Rückstellelement, insbesondere ein Federelement 36, das als verstellbare Spiralfeder dargestellt ist, direkt oder indirekt über ein weiteres Stellglied auf den ersten Greifhebel 43 einwirkt. Ein Verschieben der Schubstange 35 führt somit zu einem Öffnen, d.h. einem Auseinanderbewegen der freien Enden der Greifhebel 43, 44.

An den freien Enden der Greifhebel 43, 44 ist jeweils eine Haltebacke 47, 48 angeordnet. Die Haltebacken sind auf den jeweils zu haltenden Artikel bzw. dessen äußerer Form abgestimmt und mittels geeigneter Befestigungselemente an den Greifhebeln austauschbar angelenkt.

Die Kraft, mit der die Greifhebel gegeneinander drücken und somit den Artikel festhalten, wird in der dargestellten Ausführungsform mittels einer Stellschraube 37 über das Federelement 36 eingestellt. Durch die drehbare Anordnung der Greifhebel 43, 44 um ihre Greifhebelachsen 45, 46 sowie ihre Koppelung mittels der Verzahnung 49 ist sichergestellt, daß ein Artikel 4 immer mittig gegriffen wird und sodann auch symmetrisch bezüglich einer Mittellinie 64 des Stapelbandes 61 des Stapelbandförderers 60 auf dem Stapelband 61 abgelegt werden kann. Ein Mittenversatz wird hierdurch erfindungsgemäß im Wesentlichen völlig ausgeschlossen.

Wie in Fig. 1 dargestellt, ist stromab von dem Übergabekopf 30 der Stapelbandförderer 60 angeordnet, an den die einzeln von dem Übergabekopf bzw. dessen Artikelaufnahmeeinheiten 40 gehalterten Artikel 4 übergeben werden und dort nebeneinander in - durch Mitnehmer 63 des Stapelbandes 61 in getrennte - Packfächer 62 abgelegt werden. Hierbei entspricht die Größe der einzelnen Packfächer 62 der Anzahl der Artikel 4, die in einem (nicht dargestellten) Stapelpacker der stromab des Stapelbandförderers 60 angeordnet ist, zu einer Stangenpackung zusammen verpackt werden. Als Beispiel sind in Fig.1 neun Artikel pro Packfach angeordnet.

Der Stapelbandförderer 60 weist ein Stapelband 61 auf, das über eine Treibscheibe 65 z.B. mittels einer Verzahnung angetrieben wird. Hierbei ist die Treibscheibe 65 auf einer Treibwelle 67 drehfest angeordnet, die um eine Treibachse 66 gegenläufig zum Übergabekopf 30 rotiert.

Entlang der Außenseite des Stapelbandes 61 ist auf der dem Übergabekopf zugewandten Seite ein Gegenlager 68 ausgebildet, auf dem die an den Stapelbandförderer übergebenen Artikel entlang laufen, während sie von den Mitnehmern 63 des Stapelbandes 61 von der Übergabestelle weg zu dem Stapelpacker gefördert werden. Nebenbei sei erwähnt, daß das Stapelband 61 nicht lediglich als flaches Band vorstellbar ist sondern auch als Kette bzw. eine Mehrzahl unterbrochener Einzelbänder, Drähte oder andere geeignete Fördereinrichtungen.

Im Bereich der Übergabestelle der Artikel vom Übergabekopf auf den Stapelbandförderer, also stromab von dem Übergabekopf 30 und stromauf von dem Stapelbandförderer 60, ist eine rotierende Andrückvorrichtung 50, die im Folgenden auch als Sperrrad bezeichnet wird, angeordnet.

Das Sperrrad wird im Folgenden anhand der Fig. 1 bis 8 näher beschrieben. Das Sperrrad 50 umfaßt in der hier dargestellten Ausführungsform zwei Sperrscheiben 52, 53 die im Wesentlichen gleich ausgebildet sind und mittels einer Distanzhülse 57 beabstandet nebeneinander drehfest auf einer Antriebswelle 59 des Sperrrades mittels geeigneter Befestigungsmittel angeordnet sind. Die Antriebswelle 59 rotiert hierbei gegenläufig zur Drehrichtung des Übergabekopfes (wie in Fig. 1 gezeigt) um eine Sperrradachse 51, die stationär und parallel zur Rotationsachse 31 des Übergabekopfes 30 ausgebildet ist.

Die einzelnen Sperrscheiben 52, 53 sind senkrecht zur Sperrradachse 51 auf der Antriebswelle 59 angeordnet, so daß sie jeweils zur Mittellinie 64 des Stapelbandes 61 des Stapelbandförderers 60 jeweils den gleichen seitlichen Abstand aufweisen. Der durch die Länge der Distanzhülse 57 bestimmte Abstand ist so gewählt, daß er größer ist als die Breite des Stapelbandes 61 und der Mitnehmer 63 des Stapelbandes 61, so daß sich die einzelnen Sperrscheiben 52, 53 beiderseits des Stapelbandes und der Mitnehmer vorbeibewegen können.

Der Abstand der einzelnen Sperrscheiben 52, 53 ist jedoch gleichzeitig so bemessen, daß er geringer ist, als die Breite eines zu fördernden Artikels 4 der zwischen den Haltebacken 47, 48 einer Artikelaufnahmeeinheit 40 gehaltert wird. Hierbei ist auch ihr Außenabstand so gewählt, daß er geringer ist als die Außenbreite des Artikels, so daß die Sperrscheiben nicht mit den Haltebacken 47, 48 kollidieren können.

Im Folgenden soll der Ablauf der Artikelübergabe näher beschrieben werden. Wie in Fig. 1 dargestellt, wird ein Artikel 4 der von einer Zuführeinrichtung 20 (insb. Packkopf) angeliefert wird, indem er zwischen Zuführbacken 21 und 22 gehalten wird, von zwei Haltebacken 47, 48 der Artikelaufnahmeeinheit 40 ergriffen, wobei die Mittellinie zwischen den Haltebacken der Greifhebel der Artikelaufnahmeeinheit 40 und der Zuführbacken 21, 22 der Zuführeinrichtung 20 aufeinander ausgerichtet sind bzw. eine Linie bilden.

Zu dem Zeitpunkt, da die Haltebacken 47, 48 den Artikel 4 ergriffen haben, wird dieser von den Zuführbacken 21, 22 losgelassen. Hierbei rotiert der Übergabekopf 30 kontinuierlich in der in Fig. 1 dargestellten Richtung (Uhrzeigersinn).

Während dieser Rotation schwenkt das Schwenkteil 41 in entgegengesetzter Drehrichtung um die Drehachse 42, wodurch der gehalterte Artikel 4 in seiner absoluten Geschwindigkeit auf ca. ein Drittel verlangsamt wird und um seine Artikelhalteachse 5 um etwa 90° gedreht wird. Hierbei wird als Artikelhalteachse die in Fig. 2 dargestellte Achse 5 bezeichnet, die im Wesentlichen durch einen Mittelpunkt des Artikels und durch die Mittelpunkte der Flächen geht, an denen der Artikel von den Haltebacken 47, 48 gehaltert wird.

Die Artikelhalteachse 5 ist im Wesentlichen senkrecht zur Drehbewegungsrichtung des Artikels sowie zur Drehrichtung des Übergabekopfes und parallel zur Rotationsachse 31.

Vorzugsweise erfolgt das Drehen des Schwenkteiles 41 und somit des Artikels 4 um die Drehachse 42 erst in einem Bereich nahe der Übergabestelle zwischen Übergabekopf 30 und Stapelbandförderer 60. In diesem Bereich ist auch die rotierende Andrückvorrichtung 50 angeordnet.

Wie in Fig. 1 dargestellt, sind die beiden Sperrscheiben 51, 53 der rotierenden Andrückvorrichtung 50 als Kurvenscheiben ausgebildet, wobei die äußere Umfangslinie der Sperrscheiben im Wesentlichen sägezahnförmig ausgebildet ist. In der dargestellten Ausführungsform sind drei einzelne Sägezähne 54 ausgebildet, wobei in Umlaufrichtung jeweils der Zahnrücken 55 eines Zahnes 54 seiner Zahnspitze 56 vorauseilt.

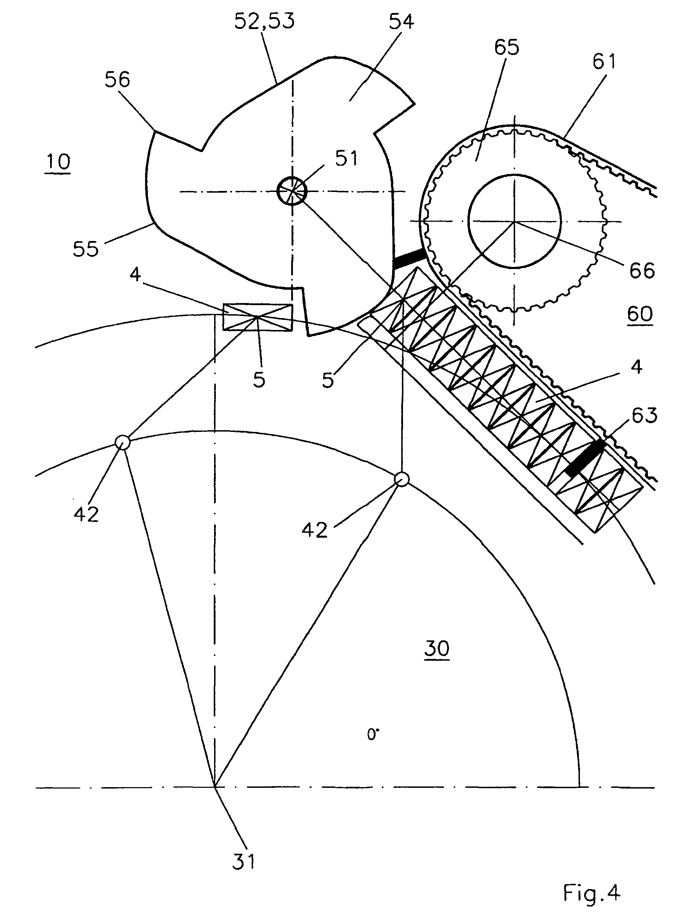

Auf diese Weise ist es möglich, wie in den Fig. 4 bis 8 dargestellt, daß ein Artikel 4 durch Schwenken des Schwenkteiles 41 um die Drehachse 42 um 90° gedreht wird, während er an den Stapelbandförderer 60 übergeben und hierbei auf dem Gegenlager 68 abgelegt wird. Während sich Übergabekopf 30 und Sperrrad 50 kontinuierlich gegenläufig drehen, dreht sich insbesondere im Übergabebereich (ca. letztes Drittel des 180° Artikelumlaufes) auch die Artikelaufnahmeeinheit 40 und schwenkt hierbei den Artikel 4 um die Artikelhalteachse 5.

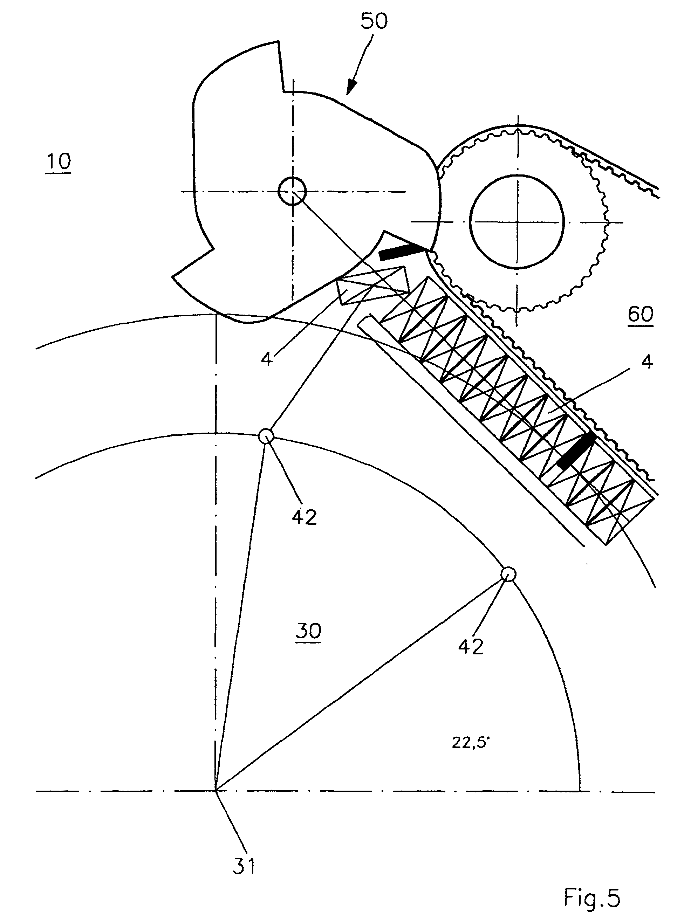

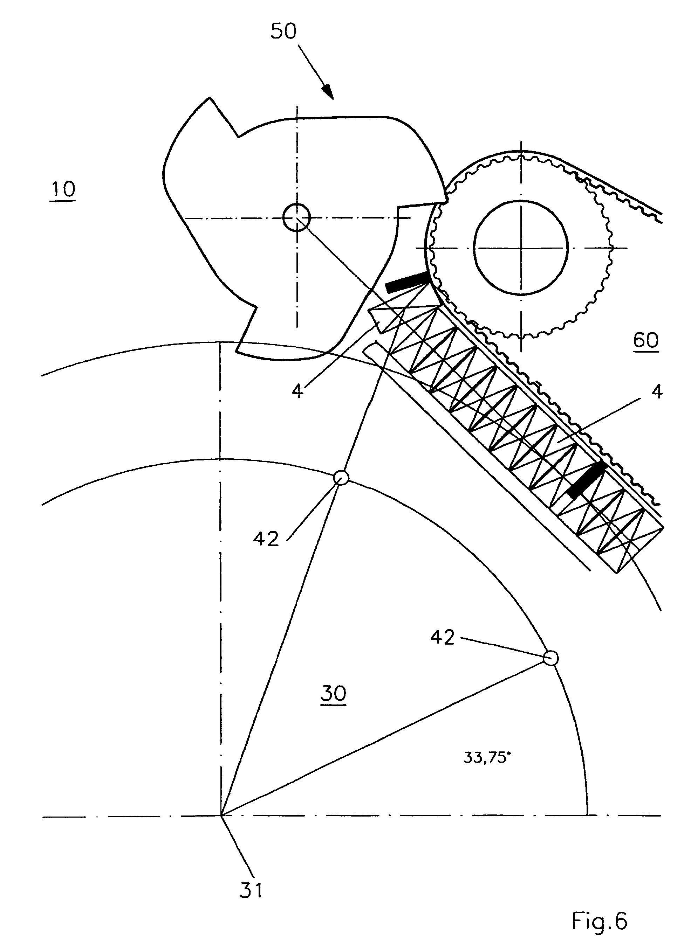

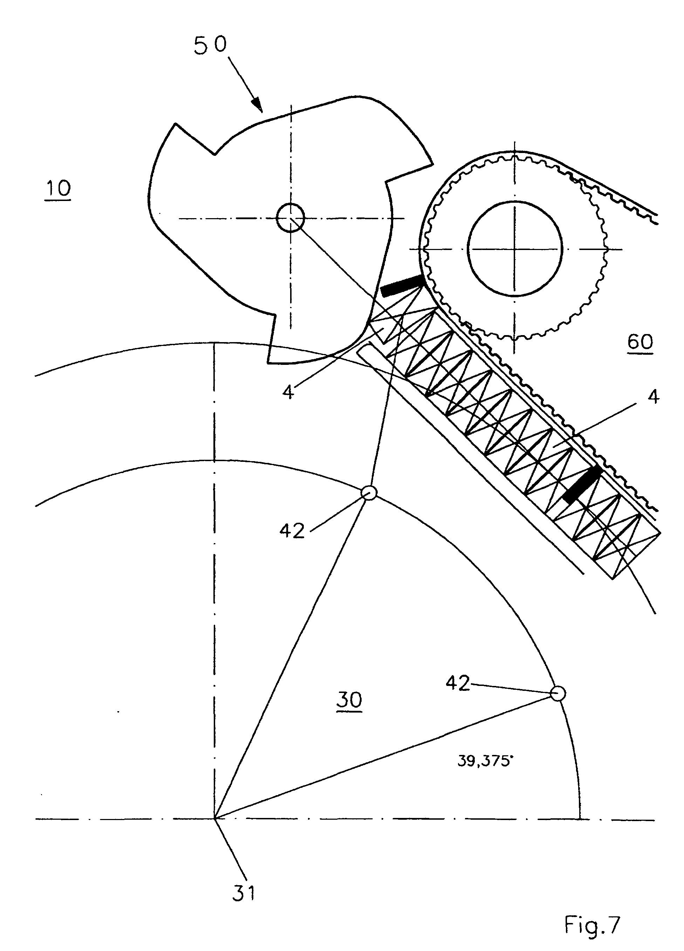

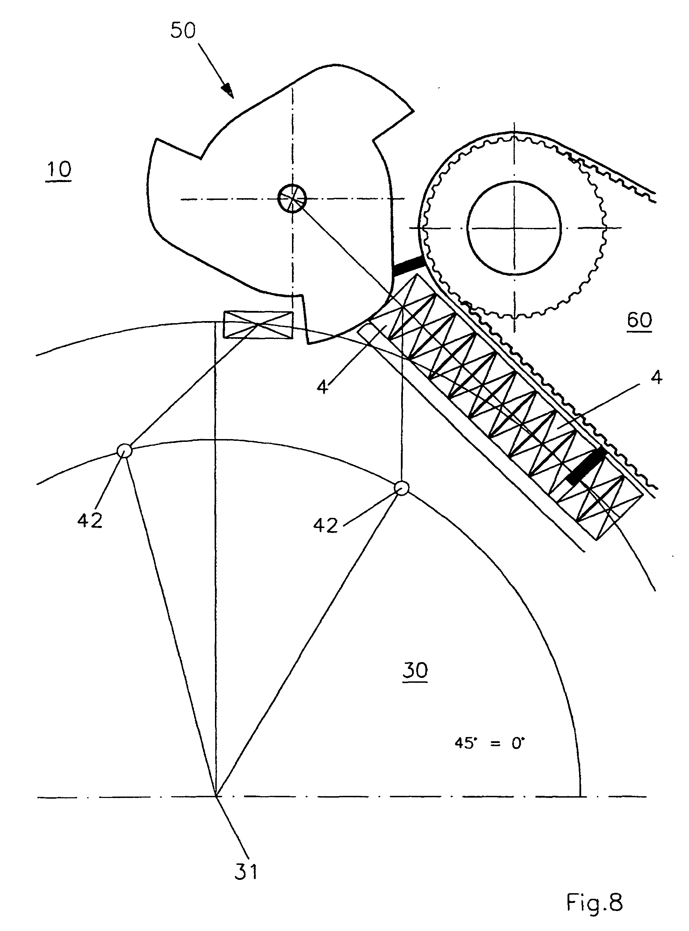

Die Fig. 4 bis 8 zeigen hierbei ausgewählte Schritte während dieser Artikelübergabe in den Übergabebereich wobei sich der Übergabekopf zwischen den Fig. 4 und 8 um 45° weitergedreht hat. Fig. 5 stellt hierbei eine gegenüber von Fig. 4 um 22,5° verdrehte Stellung dar, Fig. 6 eine um 33,75° verdrehte Stellung und Fig. 7 eine um 39,375° verdrehte Stellung gegenüber Fig. 4. Aus den einzelnen Stellungen ist ersichtlich, wie die Zähne des Sperrrades mit den Artikeln zusammenwirken, hierbei eine (vgl. Fig. 5) Übergabe des Artikels durch Freigeben des hierfür benötigten Raumes und ein Auflegen auf das Gegenlager 68 ermöglichen, sodann (vgl. Fig. 7 und 8) über den Zahnrücken ein Niederhalten bzw. Andrücken des zuletzt aufgelegten Artikels auf die bereits auf dem Gegenlager in einem Packfach 62 nebeneinander gestapelten zuvor übergebenen Artikel bewirken und somit sicherstellen, daß jeder Artikel in korrekter Lage neben den anderen bereits zuvor übergegebenen Artikeln an dem Stapelbandförderer 60 zu liegen kommt so daß es zu keiner Blockierung nachfolgender Artikel oder fehlerhaften Stangenverpackungen kommen kann.

Nachdem der zu übergebende Artikel in einem Packfach 62 abgelegt worden ist, öffnen sich, verursacht durch eine Linearbewegung der Schubstange 35, die Haltebacken 47 und 48, so daß der Artikel 4 freigegeben wird. Hiernach rotiert die Artikelaufnahmeeinheit 40 um ihre Drehachse 42 gleichsinnig mit dem Übergabekopf 30 in ihre ursprüngliche Ausgangsstellung zurück, um sodann einen neuen von der Zuführeinrichtung 20 angelieferten Artikel übernehmen zu können.

Wie beschrieben, wird durch das Drehen des Schwenkteiles 41 im kontinuierlich umlaufenden Übergabekopf 30 eine Verzögerung der Bewegung des Artikels 4 und ein sanftes Anlegen beim Anstapeln in dem Packfach 62 erreicht. Für das Anstapeln des Artikels 4 in dem Packfach 62 des Stapelbandförderers 60 dient das synchron mit dem Übergabekopf 30 umlaufende Sperrrad 50, bei Verwendung eines Stapelbandes 61 die beiderseits zu diesen angeordneten Sperrscheiben 52, 53 des Sperrrades 50 zur Lagesicherung der abgelegten Artikel.

Durch das Verdrehen der Artikelaufnahmeeinheiten gegenüber dem Aufgabekopf wird eine Relativbewegung des Produktes bei gleichförmiger Drehbewegung des Übergabekopfes bewirkt. Soweit es das Sperrrad betrifft, ist die beschriebene Ausführungsform keineswegs auf lediglich zwei Sperrscheiben gleicher Ausbildung beschränkt, die Umlaufkontur der einzelnen Sperrscheiben bzw. des Sperrrades kann hier durchaus unterschiedlich ausgebildet sein insbesondere dann, wenn zwischen den beschriebenen Sperrscheiben weitere, auf eine von einem Quader abweichende Außenform eines zu übergebenden Produktes ausgelegte Sperrscheiben, angeordnet sind. Je nach Umlaufgeschwindigkeit und Sperrraddurchmesser können hieran auch mehr als drei Zähne ausgebildet sein.

Erfindungsgemäß werden bei der erfindungsgemäßen Anstapelvorrichtung 10, insbesondere soweit es die Bewegung der Haltebacken 47, 48 zueinander betrifft, aber auch soweit es alle anderen frei nach außen hin ungeschützten Bewegungsorgane betrifft, von diesen lediglich Rotationsbewegungen durchgeführt. Funktionsstörungen durch Verzuckerungen infolge von Ablagerung von Zuckerstaub bleiben daher auf die Dauertauglichkeit der Zuführeinführrichtung weitgehend ohne Einfluß. Dies ist insbesondere wichtig beim Einsatz der Zuführeinrichtung in der Hartkaramellverpackung.

Soweit es die Sperrscheiben betrifft, wirken diese funktionsstabilisierend, da sie das Zurückweichen oder Rückkippen der Produkte, die an dem Stapelbandförderer abgelegt sind, verhindern. Durch den oben beschriebenen einseitigen Aufbau der Artikelaufnahmeeinheiten mit fliegend gelagerten Schwenkteilen wird ein freier Zugang und eine sehr gute Wartungsfreundlichkeit ermöglicht, was den Dauerbetrieb der erfindungsgemäßen Zuführeinrichtung einer Verpackungsmaschine sicherstellt.

## Patentansprüche

1. Vorrichtung zum Anstapeln kleinstückiger Artikel (4), insbesondere einer Verpackungsmaschine (1), mit einem rotierenden Übergabekopf (30), an dem eine Mehrzahl von Artikelaufnahmeeinheiten (40) zum Haltern jeweils eines Artikels (4) drehbar angeordnet sind, und mit
einem stromab des Übergabekopfes (30) angeordneten Stapelbandförderer (60) mit einem umlaufenden Stapelband (61) zur gruppenweisen Aufnahme der einzeln von dem Übergabekopf (30) zugeführten Artikel (4), und
einer rotierenden Vorrichtung, die den Artikel (4) während der Übergabe von der Artikelaufnahmeeinheit (40) an den Stapelbandförderer (60) kontaktiert
**dadurch gekennzeichnet, dass** die rotierende Vorrichtung eine Andrückvorrichtung (50) ist, mittels der der jeweils zuletzt übergebene Artikel (4) auf andere, bereits zuvor an den Stapelbandförderer (60) übergebene Artikel (4) andrückbar ist.

2. Vorrichtung nach Anspruch 1, **dadurch gekennzeichnet, daß** jede Artikelaufnahmeeinrichtung (40) ein Schwenkteil (41) aufweist, das um eine zur Rotationsachse (31) des Übergabekopfes (30) parallele Drehachse (42) drehbar an dem Übergabekopf (30) angelenkt ist.

3. Vorrichtung nach Anspruch 2, **dadurch gekennzeichnet, daß** an dem Schwenkteil (41) ein Paar von Greifhebeln (43, 44) angeordnet ist, die jeweils um eine zu der Drehachse (42) senkrechte Greifhebelachse (45, 46) schwenkbar sind.

4. Vorrichtung nach Anspruch 3, **dadurch gekennzeichnet, daß** an einem freien Ende der Greifhebel (43, 44), das von den Greifhebelachsen (45, 46) beabstandet ist, Haltebacken (47, 48) zum Aufnehmen und Haltem des Artikels (4) angeordnet sind.

5. Vorrichtung nach Anspruch 4, **dadurch gekennzeichnet, daß** eine zur Drehachse (42) des Schwenkteiles (41) parallele Artikelhaltelinie (5) zwischen Mittelpunkten der einen Artikel (4) halternden Haltebacken (47, 48) in Umlaufrichtung des Übergabekopfes (30) vor der Drehachse (42) des Schwenkteiles (41) positioniert ist.

6. Vorrichtung nach einem der Ansprüche 1 bis 5, **dadurch gekennzeichnet, daß** die rotierende Andrückvorrichtung (50) an einer zur Rotationsachse (31) des Übergabekopfes (30) parallelen Sperrradachse (51) angeordnet ist.

7. Vorrichtung nach einem der Ansprüche 1 bis 6, **dadurch gekennzeichnet, daß** die rotierende Andrückvorrichtung (50) als entgegen der Drehrichtung des Übergabekopfes (30) kontinuierlich umlaufendes Sperrrad ausgebildet ist.

8. Vorrichtung nach Anspruch 7, **dadurch gekennzeichnet, daß** das Sperrrad (50) zwei parallele, von einander beabstandete Sperrscheiben (52, 53) aufweist, deren Abstand größer ist, als die Breite des Stapelbandes (61) des Stapelbandförderers (60).

9. Vorrichtung nach einem der Ansprüche 7 oder 8, **dadurch gekennzeichnet, daß** das Sperrrad (50) und/ oder die Sperrscheiben (52, 53) an ihrer äußeren Umfangslinie im wesentlichen sägezahnförmig ausgebildet sind, wobei ein Zahnrücken (55) eines Zahnes (54) in Umlaufrichtung des Sperrrades (50) jeweils vor der Zahnspitze (56) des Zahnes (54) positioniert ist.

10. Vorrichtung nach einem der Ansprüche 7 bis 9, **dadurch gekennzeichnet, daß** die Umlaufgeschwindigkeiten des Sperrrades (50) und des Übergabekopfes (30) in einem festen Drehzahlverhältnis zueinander stehen.

11. Vorrichtung nach einem der Ansprüche 1 bis 10, **dadurch gekennzeichnet, daß** an dem Stapelband (61) Packfächer (62) ausgebildet sind, die durch Mitnehmer (63) begrenzt sind, die im wesentlichen vertikal zum Stapelband (61) an diesem angeordnet sind.

12. Verfahren zum Anstapeln kleinstückiger Artikel mit folgenden Schritten:
- Aufnehmen und Haltern eines Artikels (4) in einer Artikelaufnahmeeinheit (40) eines rotierenden Übergabekopfes (30),
- Drehen des gehalterten Artikels (4) relativ zu dem Übergabekopf (30), und
- Übergeben des gedrehten Artikels (4) an einen Stapelbandförderer (60), wobei die jeweilige Lage des Artikels (4) während der Übergabe von der Artikelaufnahmeeinheit (40) an den Stapelbandförderer (60) durch eine rotierende Vorrichtung (50) gesichert wird,
**dadurch gekennzeichnet, dass** der jeweils zuletzt übergebene Artikel (4) von der als Andrückvorrichtung (50) ausgebildeten rotierenden Vorrichtung auf andere bereits zuvor an den Stapelbandförderer (60) übergebene Artikeln (4) angedrückt wird.

13. Verfahren nach Anspruch 12, **dadurch gekennzeichnet, daß** das Verfahren mittels einer Vorrichtung nach einem der Ansprüche 1 bis 11 durchgeführt wird.

14. Verfahren nach Anspruch 12 oder 13, **dadurch gekennzeichnet, daß** das Drehen des gehalterten Artikels (4) entgegen der Drehrichtung des rotierenden Übergabekopfes (30) erfolgt.

15. Verfahren nach einem der Ansprüche 12 bis 14, **dadurch gekennzeichnet, daß** die Artikelaufnahmeeinheit (40) nach dem Übergeben des Artikels (4) an den Stapelbandförderer (60) in Drehrichtung des rotierenden Übergabekopfes (30) zurückgedreht wird.

16. Verfahren nach einem der Ansprüche 12 bis 15, **dadurch gekennzeichnet, daß** der in der Artikelaufnahmeeinheit (40) gehalterte Artikel (4) zwischen Aufnahme und Übergabe ausschließlich rotatorische Positionsänderungen erfährt.

17. Verfahren nach einem der Ansprüche 12 bis 16, **dadurch gekennzeichnet, daß** die absolute Bewegungsgeschwindigkeit des in der Artikelaufnahmeeinheit (40) gehalterten Artikels (4) zwischen Aufnahme und Übergabe reduziert wird.

18. Verfahren nach einem der Ansprüche 12 bis 17, **dadurch gekennzeichnet, daß** die Artikel (4) durch die Haltebacken (47, 48) des Übergabekopfes (30) von Zuführbacken (21, 22) einer im wesentlichen mit der Umlaufgeschwindigkeit des Übergabekopfes (30) rotierenden Zuführeinheit (20) aufgenommen werden.

19. Verfahren nach der Anspruch 18, **dadurch gekennzeichnet, daß** die Zuführeinheit (20), von der die Artikel (4) durch die Haltebacken (47, 48) aufgenommen werden, ein rotierender Packkopf ist, in dem die Artikel (4) verpackt werden.

20. Verfahren nach einem der Ansprüche 12 bis 19, **dadurch gekennzeichnet, daß** die Umlaufgeschwindigkeit des Übergabekopfes (30) wesentlich größer ist, als die Umlaufgeschwindigkeit des Stapelbandförderers (60).

## Claims

1. Device for stacking small-size articles (4), particularly a packaging machine (1), with a rotating transfer head (30), at which a plurality of article receiving units (40) each for holding a respective article (4) are rotatably arranged, and with a stack belt conveyor (60), which is arranged downstream of the transfer head (30), with an encircling stack belt (61) for group-by-group reception of the individual articles (4) fed by the transfer head (30), and a rotating device, which contacts the articles (4) during transfer from the article receiving unit (40) to the stack belt conveyor (60), **characterised in that** the rotating device is a presser device (50), by means of which the respective last transferred article (4) can be pressed against other articles (4) already previously transferred to the stack belt conveyor (60).

2. Device according to claim 1, **characterised in that** each article receiving device (40) comprises a pivot part (41) which is articulated to the transfer head (30) to be rotatable about an axis (42) of rotation parallel to the axis (31) of rotation of the transfer head (30).

3. Device according to claim 2, **characterised in that** a pair of gripper levers (43, 44), which are each pivotable about a respective gripper lever axis (45, 46) perpendicular to the axis (42) of rotation, is arranged at the pivot part (41).

4. Device according to claim 3, **characterised in that** holding jaws (47, 48) for receiving and holding the article (4) are arranged at a free end of the gripper lever (43, 44) which is spaced from the gripper lever axes (45, 46).

5. Device according to claim 4, **characterised in that** an article holding line (5), which is parallel to the axis (42) of rotation of the pivot part (41 ), is positioned between centre points of the holding jaws (47, 48), which hold an article (4), in direction of circulation of the transfer head (30) and in front of the axis (42) of rotation of the pivot part (41).

6. Device according to one of claims 1 to 5, **characterised in that** the rotating presser device (50) is arranged at a blocking wheel axis (51) parallel to the axis (31) of rotation of the transfer head (30).

7. Device according to one of claims 1 to 6, **characterised in that** the rotating presser device (50) is constructed as a blocking wheel continuously circulating against the direction of rotation of the transfer head (30).

8. Device according to claim 7, **characterised in that** the blocking wheel (50) comprises two mutually spaced-apart blocking discs (52, 53), the spacing of which is greater than the width of the stack belt (61) of the stack belt conveyor (60).

9. Device according to one of claims 7 and 8, **characterised in that** the blocking wheel (50) and/or the blocking discs (52, 53) are constructed at their outer circumferential line to be substantially sawtooth-shaped, wherein a tooth back (55) of a tooth (54) is positioned in direction of circulation of the blocking wheel (50) in each instance in front of the tooth tip (56) of the tooth (54).

10. Device according to one of claims 7 to 9, **characterised in that** the speeds of circulation of the blocking wheel (50) and the transfer head (30) are disposed in a fixed rotational speed ratio rotative to one another.

11. Device according to one of claims 1 to 10, **characterised in that** packing compartments (62), which are bounded by entrainers (63) arranged substantially vertically with respect to the stack belt (61) and at this, are formed at the stack belt (61).

12. Method of stacking small-size articles comprising the following steps:
- receiving and holding an article (4) in an article receiving unit (40) of a rotating transfer head (30),
- rotating the held article (4) relative to the transfer head (30) and
- transferring the rotated article (4) to a stack belt conveyor (60), wherein the respective position of the article (4) during the transfer from the article receiving unit (40) to the stack belt conveyor (60) is secured by a rotating device (50),
**characterised in that** the respective last transferred article (4) is pressed by the rotating device, which is constructed as a presser device (50), against other articles (4) already previously transferred to the stack belt conveyor (60).

13. Method according to claim 12, **characterised in that** the method is carried out by means of a device according to one of claims 1 to 11.

14. Method according to claim 12 or 13, **characterised in that** the rotation of the held article (4) takes place against the direction of rotation of the rotating transfer head (30).

15. Method according to one of claims 12 to 14, **characterised in that** the article receiving unit (40) after transfer of the article (4) to the stack belt conveyor (60) is rotated back in the rotational direction of the rotating transfer head (30).

16. Method according to one of claims 12 to 15, **characterised in that** the article (4) held in the article receiving unit (40) experiences exclusively rotational positional changes between reception and transfer.

17. Method according to one of claims 12 to 16, **characterised in that** the absolute speed of movement of the article (4) held in the article receiving unit (40) is reduced between reception and transfer.

18. Method according to one of claims 12 to 17, **characterised in that** the articles (4) are received by the holding jaws (47, 48) of the transfer head (30) from feed jaws (21, 20) of a feed unit (20) rotating substantially at the speed of circulation of the transfer head (30).

19. Method according to claim 18, **characterised in that** the feed unit (20) from which the articles (4) are received by the holding jaws (47, 48) is a rotating packaging head in which the articles (4) are packaged.

20. Method according to one of claims 12 to 19, **characterised in that** the speed of circulation of the transfer head (30) is substantially greater than the speed of circulation of the stack belt conveyor (60).

## Revendications

1. Dispositif d'empilage de petits objets (4), en particulier d'une machine d'emballage (1), avec une tête de transfert rotative (30) sur laquelle plusieurs unités de réception d'objets (40), destinées à maintenir chacune un objet (4), sont disposées de manière rotative et avec
un transporteur à bande d'empilage (60) disposé en aval de la tête de transfert (30) avec une bande d'empilage (61) tournante pour la réception en groupes des objets (4) amenés séparément par la tête de transfert (30) et
un dispositif rotatif qui entre en contact avec l'objet (4) pendant le transfert de l'unité de réception des objets (40) au transporteur à bande d'empilage (60),
**caractérisé en ce que** le dispositif rotatif est un dispositif presseur (50) au moyen duquel le dernier objet respectivement transféré (4) peut être pressé sur d'autres objets (4) préalablement transférés au transporteur à bande d'empilage (60).

2. Dispositif selon la revendication 1, **caractérisé en ce que** chaque dispositif de réception des objets (40) comporte un élément pivotant (41) qui est articulé de manière à pouvoir tourner sur la tête de transfert (30) autour d'un pivot (42) parallèle à l'axe de rotation (31) de la tête de transfert (30).

3. Dispositif selon la revendication 2, **caractérisé en ce qu'**une paire de leviers de préhension (43, 44), pouvant respectivement pivoter autour d'un axe de leviers de préhension (45, 46) perpendiculaire au pivot (42), est disposée sur l'élément pivotant (41).

4. Dispositif selon la revendication 3, **caractérisé en ce qu'**à une extrémité libre des leviers de préhension (43, 44), qui présente un écart par rapport aux axes des leviers de préhension (45, 46), des mâchoires de serrage (47, 48) sont disposées pour la réception et le serrage de l'objet (4).

5. Dispositif selon la revendication 4, **caractérisé en ce qu'**une ligne d'objets (5) parallèle au pivot (42) de l'élément pivotant (41) est positionnée entre des points centraux des mâchoires de serrage (47, 48) qui maintiennent un objet (4), dans le sens de rotation de la tête de transfert (30), devant le pivot (42) de l'élément pivotant (41).

6. Dispositif selon une des revendications 1 à 5, **caractérisé en ce que** le dispositif de pression rotatif (50) est disposé sur un axe à roue à déclic (51) parallèle à l'axe de rotation (31) de la tête de transfert (30).

7. Dispositif selon une des revendications 1 à 6, **caractérisé en ce que** le dispositif de pression rotatif (50) est réalisé comme une roue à déclic qui tourne continuellement dans le sens de rotation opposé à celui de la tête de transfert (30).

8. Dispositif selon la revendication 7, **caractérisé en ce que** la roue à déclic (50) comporte deux rondelles à déclic parallèles écartées l'une de l'autre (52, 53), leur écart étant supérieur à la largeur de la bande d'empilage (61) du transporteur à bande d'empilage (60).

9. Dispositif selon une des revendications 7 ou 8, **caractérisé en ce que**, sur leur ligne de circonférence extérieure, la roue à déclic (50) et/ ou les rondelles à déclic (52, 53) sont réalisées sensiblement en forme de dents de scie, le dos (55) d'une dent (54) étant chaque fois positionné devant la pointe (56) de la dent (54) dans le sens de rotation de la roue à déclic (50).

10. Dispositif selon une des revendications 7 à 9, **caractérisé en ce que** les vitesses de rotation de la roue à déclic (50) et de la tête de transfert (30) sont proportionnelles de manière fixe l'une par rapport à l'autre pour ce qui est du nombre de tours.

11. Dispositif selon une des revendications 1 à 10, **caractérisé en ce que** des compartiments d'emballage (62), qui sont limités par des tocs d'entraînement (63) disposés sur, et sensiblement verticalement par rapport à, la bande d'empilage (61), sont réalisés.

12. Procédé d'empilage d'objets de petite taille comprenant les étapes suivantes :
- réception et serrage d'un objet (4) dans une unité de réception d'objets (40) d'une tête de transfert rotative (30),
- rotation de l'objet serré (4) par rapport à la tête de transfert (30) et
- transfert de l'objet tourné (4) à un transporteur à bande d'empilage (60), la position respective de l'objet (4) pendant le transfert de l'unité de réception d'objets (40) au transporteur à bande d'empilage (60) étant assurée par un dispositif rotatif (50),
**caractérisé en ce que** le dernier objet (4) respectivement transféré est pressé par le dispositif rotatif réalisé comme dispositif de pression (50) sur d'autres objets (4) déjà préalablement transférés au transporteur à bande d'empilage (60).

13. Procédé selon la revendication 12, **caractérisé en ce que** le procédé est mis en oeuvre au moyen d'un dispositif selon une des revendications 1 à 11.

14. Procédé selon la revendication 12 ou 13, **caractérisé en ce que** la rotation de l'objet serré (4) a lieu dans le sens de rotation opposé à celui de la tête de transfert rotative (30).

15. Procédé selon une des revendications 12 à 14, **caractérisé en ce que** l'unité de réception des objets (40) est à nouveau tournée dans le sens de rotation de la tête de transfert rotative (30) après le transfert de l'objet (4) au transporteur à bande d'empilage (60).

16. Procédé selon une des revendications 12 à 15, **caractérisé en ce que** l'objet serré (4) dans l'unité de réception des objets (40) subit exclusivement des changements de position par rotation entre la réception et le transfert.

17. Procédé selon une des revendications 12 à 16, **caractérisé en ce que** la vitesse de mouvement absolue de l'objet serré (4) dans l'unité de réception des objets (40) est réduite entre la réception et le transfert.

18. Procédé selon une des revendications 12 à 17, **caractérisé en ce que**, via les mâchoires de serrage (47, 48) de la tête de serrage (30), les objets (4) sont réceptionnés par des mâchoires d'amenée (21, 22) d'une unité d'amenée (20) qui tourne essentiellement à la vitesse de rotation de la tête de transfert (30).

19. Procédé selon la revendication 18, **caractérisé en ce que** l'unité d'amenée (20) qui reçoit les objets (4) via les mâchoires de serrage (47, 48) est une tête d'emballage rotative dans laquelle les objets (4) sont emballés.

20. Procédé selon une des revendications 12 à 19, **caractérisé en ce que** la vitesse de rotation de la tête de transfert (30) est nettement supérieure à la vitesse de rotation du transporteur à bande d'empilage (60).
